# EUROPÄISCHE PATENTANMELDUNG

(11) **EP 0 962 296 A2**
(43) Veröffentlichungstag der Anmeldung: **08.12.1999**
(21) Anmeldenummer: 98120532.1
(22) Anmeldetag: 30.10.1998
(51) Int. Cl.: B29C 45/28

(54) **Nadelverschlussdüse**

(30) Priorität: 03.06.1998 DE 29809855 U
(71) Anmelder: Günther Heisskanaltechnik GmbH, 35066 Frankenberg/Eder (DE)
(72) Erfinder: Günther, Herbert, Dipl.-Ing., 35108 Allendorf/eder (DE)
(74) Vertreter: Olbricht, Karl Heinrich, Dipl.-Phys.

(57) **Zusammenfassung**

Eine Nadelverschlußdüse 10 zum Zuführen einer Kunststoff-Schmelze unter hohem Druck an eine Form-Kavität eines trenn- und kühlbaren Werkzeugs hat eine in Gleitführungen innerhalb eines Materialrohrs (14) abgestützte Verschlußnadel 20 mit einem Nadel-Endstück 24, das in einen Dichtungssitz 26 dicht abschließend einführbar ist. Mit einem Vorraum 30 ist eine Druckentlastungs-Einrichtung 32, 34 unmittelbar strömungsverbunden, z.B. eine zur Nadel-Längsrichtung L in einem Winkel W verlaufende Abzweigbohrung 32 an einem Führungsstück 40, wahlweise oder zusätzlich in Form einer sternförmigen Gruppe von Bohrungen 32, 34 am Umfang des Materialrohrs 14 und/oder Führungsstücks 40, das auch zwei höhenversetzte Querbohrungen 32, 34 aufweisen kann. Die Verschlußnadel 20 ist in den Dichtungssitz 26 vorzentriert einführbar, wobei eine Verjüngung oder Schulter 36 am unteren Nadel-Abschnitt 22 selbstzentrierend in das gegengleich gestaltete Innenprofil 42 des Führungsstücks 40 eintritt. Der Schaft der Nadel 20 wird in der oberen Führung 38 vorzentriert. Ein dünner Schaftteil 44 kann in der unteren Führung 28 mit enger Passung gleiten.

## Beschreibung

Die vorliegende Erfindung betrifft eine Nadelverschlußdüse gemäß dem Oberbegriff von Anspruch 1, der von einer Konstruktion nach DE 34 03 603 A1 ausgeht.

In Spritzgießwerkzeugen werden derartige Düsen in Heißkanalsysteme eingebaut, durch die bei einer Temperatur von z.B. 200 °C fließfähiger Kunststoff unter hohem Druck einem trennbaren Werkzeugblock zugeführt wird, der eine Form-Kavität hat und gekühlt werden kann, damit der gespritzte Artikel rasch formstabil wird. Wegen des schroffen Temperaturübergangs und eventuell durch Strömungsstörungen können je nach Material am Anguß Ungleichförmigkeiten entstehen, etwa "kalte Pfropfen" oder spannungsbelastete Bereiche.

Ferner kommt es allgemein, aber insbesondere bei Produkten kleiner Abmessungen auf genaueste Material-Dosierung an, die auch bei rascher Schußfolge gewährleistet bleiben muß. In Nadelverschlußdüsen dient die allgemein konische Spitze einer meist kolbengetriebenen Nadel dazu, eine Angußöffnung periodisch zu öffnen und zu schließen. Weil außerordentlich hohe Drücke von z.B. weit über 1.000 bar wirken, ist eine präzise Abdichtung in der Schließstellung ebenso notwendig wie eine exakte Nadelführung.

Die obenerwähnte Offenlegungsschrift beschreibt speziell einen zwangsgesteuerten Nadelverschluß für Spritzgießdüsen. Hierbei sind Kolbenführungen für Verschlußnadeln oberhalb einer von ihnen durchsetzten Verteilerplatte vorgesehen, unter der die Nadeln in Gleitführungen abgestützt sind. Darunter münden Zufuhrkanäle in einem Heißkanal für eine aus dem Verteiler kommende Schmelze, die jede Nadel umströmt und aus dem Heißkanal austritt, solange ein Nadel-Endzapfen nicht ein Verschlußstück (einen Angußring) verschließt.

Später hat man besondere Nadelprofile vorgeschlagen, z.B. gemäß DE 197 17 381 A1 eine Auswölbung oder Dreikant-Abflachungen vor der Nadelspitze. Relativ aufwendig herzustellen sind am unteren Ende der Düse bzw. Nadelhülse vorgesehene Radialstege, welche die Nadel konzentrisch umschließen. Für eine im oberen Bereich innenbeheizte Düse sieht EP 0 781 640 A2 an der Nadel einen mit ihr einstückigen Führungskopf vor, der in eine außenbeheizte Buchse gleitend eintaucht und schräg verlaufende Materialübertritts-Öffnungen hat.

Nach DE 32 45 571 A1 ist im Bereich der Nadelspitze ein Vorzentrierkörper angeordnet, der radiale Durchlässe aufweist, infolge formschlüssiger Einpassung in eine Wärmeleitdüse jedoch Wärmeverluste bewirkt, die nahe der Angußöffnung besonders unerwünscht sind. EP 0 374 346 B1 sieht Lippen vor, welche die Nadel teilweise umschließen und für die Materialzufuhr nur einen seitlichen Längskanal freilassen. Ein solcher kann laut DE 296 09 356 U1 als schräge Verschlußnadel-Aussparung ausgebildet sein; sie geht in einen engen zentrischen Kanal über, an dem ein schmaler Umfangsschlitz einen Materialaustritt bildet, um sehr flache Artikel von ihrer Schmalseite her spritzen zu können.

Den vorbekannten Anordnungen ist gemeinsam, daß trotz beachtlichem konstruktiv-mechanischem Aufwand eine zuverlässige Führung der Verschlußnadel unter hohen Spritzdrücken nicht immer gewährleistet ist. Außermittige Belastungen können nicht bloß großen Verschleiß bewirken, sondern auch Strömungsstörungen in der Schmelze, die vielfach eine Qualitätsminderung der gefertigten Artikel zur Folge haben.

Es ist ein wichtiges Ziel der Erfindung, diese und weitere Nachteile des Standes der Technik mit möglichst einfachen Mitteln zu überwinden und eine verbesserte Nadelverschlußdüse zu schaffen, in der eine einseitige Strömungsbelastung vermieden und eine gute Nadelführung sichergestellt wird. Das Konstruktionsprinzip soll sowohl für zwangsgesteuerte Nadelverschlußdüsen als auch für Einzeldüsen anwendbar sein, die direkt oder über Umlenkhebel kolbengetriebene Verschlußnadeln aufweisen.

Hauptmerkmale der Erfindung sind in Anspruch 1 angegeben. Ausgestaltungen sind Gegenstand der Ansprüche 2 bis 13.

Bei einer Nadelverschlußdüse der eingangs angegebenen Art für Heißkanalsysteme, durch die eine Kunststoff-Schmelze unter hohem Druck einem trenn- und kühlbaren Werkzeug zuführbar ist, das wenigstens eine Form-Kavität für Spritzgieß-Artikel hat, mit wenigstens einer innerhalb der beheizbaren Düse in Gleitführungen abgestützten Verschlußnadel, die zumindest in einem unteren Bereich von der durch ein Materialrohr zugeführten Schmelze umströmbar ist, und mit wenigstens einer Austrittsöffnung, die der Form-Kavität in einem Vorraum vorgeordnet und in die ein Nadel-Endteil dicht abschließend einführbar ist, sieht die Erfindung gemäß Anspruch 1 vor, daß die Nadel in einem unteren, dem Nadel-Endteil vorgeordneten Abschnitt eine mit dem Vorraum unmittelbar strömungsverbundene Druckentlastungs-Einrichtung aufweist. Tritt also das Nadel-Endteil beim Schließvorgang in die Austrittsöffnung ein, wobei die in dem Vorraum vorhandene Schmelze zwangsläufig verdrängt wird, so kann sich die dadurch entstandene Materialverdichtung und Druckerhöhung automatisch ausgleichen.

Gemäß Anspruch 2 besteht die Druckentlastungs-Einrichtung aus wenigstens einer Abzweigbohrung an einem Führungsstück, die zur Nadel-Längsrichtung z.B. radial verläuft, jedenfalls in einem Winkel, der laut Anspruch 3 kleiner oder gleich 90° ist. Insbesondere kann die bzw. jede Abzweigbohrung das Führungsstück nach Anspruch 4 quer oder schräg durchsetzen. Man erkennt, daß der fertigungstechnische Aufwand für die Druckentlastung außerordentlich gering ist.

Das gilt auch, wenn im Einklang mit Anspruch 5 wahlweise oder zusätzlich in einem unteren Abschnitt des Materialrohrs wenigstens eine zu diesem quer oder schräg verlaufende Abzweigbohrung vorhanden ist, die mit ihrem äußeren Ende genau am oberen Endbereich eines Freiraums mündet, der zwischen Materialrohr und Mundstück vorgesehen ist. Die Bohrung bewirkt einen Spüleffekt für die Schmelze und trägt zusätzlich zur Vorraum-Druckentlastung bei. Vorteilhaft ordnet man laut Anspruch 6 eine Gruppe von Bohrungen z.B. sternförmig am Umfang des Materialrohrs und/oder des Führungsstücks an, um eine möglichst gleichförmige Druckverteilung zu erzielen.

Gemäß Anspruch 7, wofür selbständiger Schutz beansprucht wird, ist die Düse mit einer zweistufigen Zentrierung für die bzw. jede Verschlußnadel versehen, wodurch ein exakter Sitz an der z.B. zylindrischen oder konischen Abdichtung gewährleistet ist. Insbesondere kann man die Verschlußnadel laut Anspruch 8 an bzw. in ihren Dichtungssitz vorzentriert einführen, so daß der bei hoher Materialbeanspruchung unvermeidliche Verschleiß auf ein absolutes Minimum reduziert wird. Dabei kann der untere Nadel-Abschnitt laut Anspruch 9 wenigstens eine Verjüngung oder Schulter aufweisen, die selbstzentrierend in das gegengleich gestaltete Innenprofil eines am Materialrohr vorhandenen Führungsstücks einführbar ist. Zwar hat man bereits laut DE 38 33 220 C2 - außer einer abgedichteten oberen Kolbenführung - auch einen Doppelkonus an der Nadelspitze als untere Vorzentrierung verwendet; hierbei ist jedoch keinerlei Druckentlastung aus dem Vorraum vorgesehen, so daß beim Einrücken der Nadel in ihre Schließposition jedesmal eine große Druckerhöhung stattfindet, Erfindungsgemäß erfolgt hingegen über die Spalte zwischen Nadel und Mundstück anschließend jeweils die Druckentlastung.

Zweckmäßig ist der Schaft der Nadel nach Anspruch 10 oberhalb einer oberen Verjüngung oder Schulter in einer oberen Führung gleitend umschließbar angeordnet. Wahlweise oder zusätzlich kann im Einklang mit Anspruch 11 ein mit kleinerem Durchmesser abgesetzter Schaftteil der Nadel oberhalb einer unteren Verjüngung von einer unteren Führung mit enger Passung gleitend umschlossen werden.

Vorteilhaft kann laut Anspruch 12 das Führungsstück zwei in einem Axialabstand angeordnete Querbohrungen aufweisen, die gemäß Anspruch 13 in einem Winkel zueinander stehen, insbesondere in einem rechten Winkel und höhenversetzt zueinander. Dadurch ist eine besonders strömungsgünstige Druckentlastung mit überaus einfachen Mitteln gewährleistet.

Weitere Merkmale, Einzelheiten und Vorteile der Erfindung ergeben sich aus dem Wortlaut der Ansprüche sowie aus der folgenden Erläuterung von Ausführungsbeispielen anhand der Zeichnung. Darin zeigen:
- Fig. 1: eine vergrößerte Axialschnittansicht des unteren Endes einer Nadelverschlußdüse,
- Fig. 2: eine ähnliche Axialschnittansicht einer anderen Düsenbauform,
- Fig. 3: eine vereinfachte Axialschnittansicht einer Nadelverschlußdüse in geöffneter Stellung und
- Fig. 4: eine Ansicht entsprechend Fig. 3, jedoch in Schließstellung.

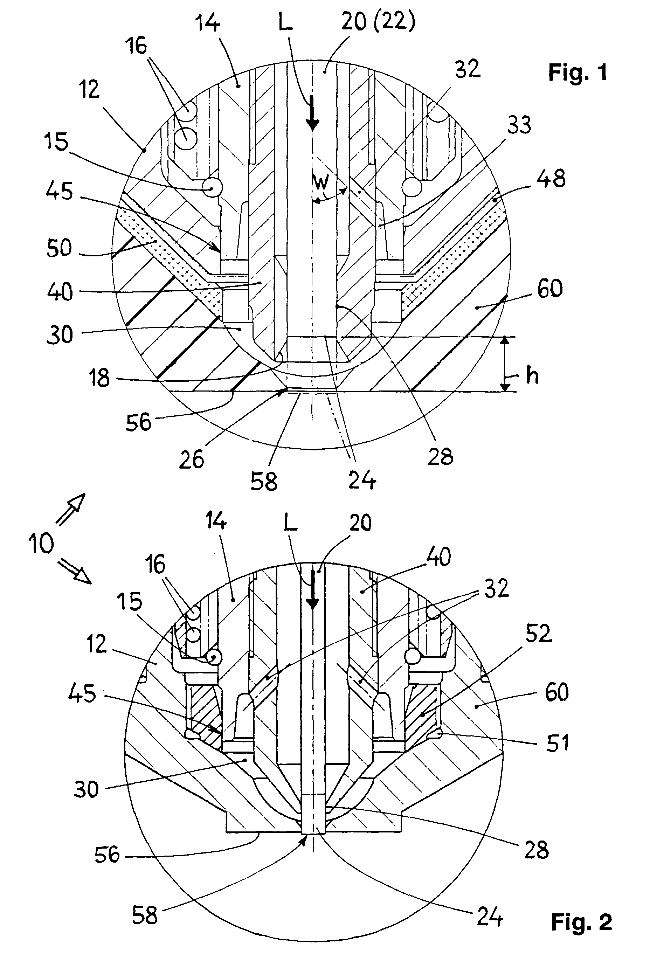

Man erkennt in Fig. 1 den unteren Teil einer allgemein mit 10 bezeichneten Nadelverschlußdüse, die innerhalb eines Düsenkörpers 12 ein Materialrohrs 14 mit einer Außenbeheizung aufweist, die im Ausführungsbeispiel als Heizwendel 16 ausgebildet ist. Ein Haltering 15 sorgt für lagerichtigen Sitz der Heizeinrichtung am Materialrohr 14. Dieses ist unten mit einem Mund- oder Führungsstück 40 verschraubt, das am unteren Ende eine Austrittsöffnung 18 hat.

Zentrisch im Materialrohr 14 befindet sich eine Verschlußnadel 20, deren unterer Abschnitt 22 einen Endteil 24 hat, der zweckmäßig als Zapfen gestaltet ist und bei herabgefahrener Nadel 20 an bzw. in einem Dichtungssitz 26 dicht abschließend anliegt. Eine untere Führung 28 sorgt für die exakt konzentrische Position des Endteils 24, der zwischen der mit ausgezogenen Linien gezeichneten Öffnungsstellung und einer mit strichpunktierten Linien angedeuteten Schließposition um die Höhe des Nadelhubs h verstellbar ist. Im gezeichneten Beispiel hat die untere Führung 28 drei Radialstege, die den Endteil 24 konzentrisch - jedoch gleitbar - einschließen.

Unterhalb des Düsenkörpers 12 ist ein Isolierspalt 48 vorgesehen, der bei dieser Ausführungsform zum Teil von einem hochtemperaturfesten Füllkörper 50 eingenommen wird. Eine Vorkammerbuchse 60 begrenzt einen Vorraum 30 und hat an einer Werkzeug-Anlagefläche 56 eine Ubertritts-Öffnung 58.

Bewegt sich die Nadel 20 nach dem Einspritzvorgang abwärts, so wird im Vorraum 30 befindliches Schmelze-Material durch das Verdrängungsvolumen des Endteils 24 unter hohen Druck gesetzt. Damit das Material ausweichen kann, ist am Führungsstück 40 wenigstens eine Abzweigbohrung 32 vorgesehen, die mit ihrem äußeren Ende genau am oberen Endbereich einer Freisetzung oder Aussparung 33 mündet, die zwischen Materialrohr 14 und Mundstück 40 vorgesehen ist. Die Bohrung 32 bewirkt daher einen Spüleffekt für die Schmelze und zusätzlich eine Druckentlastung im Vorraum 30.

Die Abzweigbohrung 32 bzw. eine Gruppe von Abzweigbohrungen 32 steht bevorzugt in einem Winkel W von beispielsweise 45° zur Achse oder Längsrichtung L der Nadel 20. Über den Umfang verteilt, können beispielsweise drei oder vier solcher Abzweigbohrungen 32 vorhanden sein, um eine gleichförmige Druckverteilung zu bewirken. Wichtig ist eine dichte Passung 45 an den unteren Enden von Düsenkörper 12 und Materialrohr 14. Dabei ist die Aussparung 33 vorteilhaft so gestaltet, daß der Spritzdruck die Dichtungswirkung verstärkt, indem das Auslauf-Ende des Materialrohrs 14 federnd aufgeweitet wird. Der darunter vorgesehene Isolierspalt 48 samt Füllkörper 50 dient zur Minimierung von Wärmeverlusten zwischen dem beheizten Materialrohr 14 und der Vorkammerbuchse 60 bzw. dem Werkzeug.

Die Bauform von Fig. 2 ist prinzipiell ähnlich. Hier ist zur Abstützung des Materialrohrs 14 ein Titanring 52 vorgesehen, dessen geringe Wärmeleitung zusammen mit Isolierspalten wesentlich dazu beiträgt, den Wärmefluß nach außen an die Vorkammerbuchse 60 zu minimieren. Man erkennt außerdem, daß die Abzweigbohrungen 32 im Führungsstück 40 gegenüberliegend symmetrisch angeordnet sind.

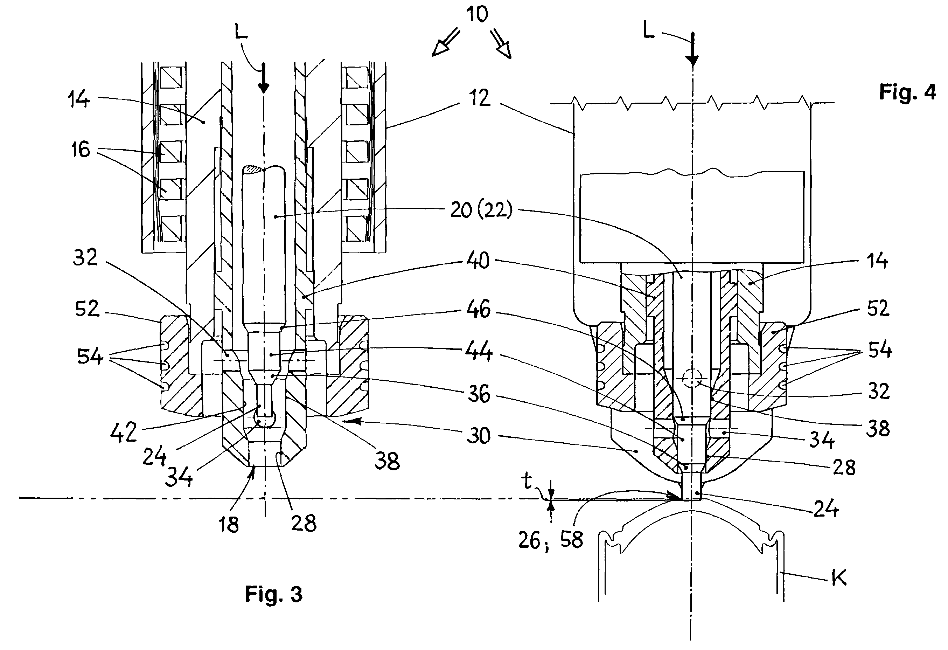

Bei grundsätzlich vergleichbarem Aufbau zeigt das Ausführungsbeispiel von Fig. 3 und 4 (in vereinfachter Darstellung) am Führungsstück 40 eine obere Querbohrung 32 und eine untere Querbohrung 34, die in einem Axialabstand zueinander rechtwinkelig verlaufen. Der Titanring 52 ist an seinem Umfang mit Nuten 54 versehen, um die Anlagefläche und damit den Wärmeübergang zum Gehäuse hin zu vermindern.

Ferner ist die Verschlußnadel 20 an ihrem unteren Abschnitt 22 zweistufig verjüngt. Man erkennt, daß an eine obere Verjüngung oder Schulter 46 ein Schaftteil 44 von kleinerem Durchmesser anschließt, der seinerseits mit einer unteren Verjüngung oder Schulter 36 in den zylindrischen Endteil bzw. den Zapfen 24 übergeht. Das Führungsstück 40 ist am unteren Ende mit einem gegengleichen Innenprofil 42 versehen. Beim Herabfahren aus der Öffnungsstellung (Fig. 3) wird die Nadel 20 zunächst mit der oberen Schulter 46 an einem kegeligen Bereich des Innenprofils 42 in Höhe der Bohrung 32 voreingefädelt. Beim weiteren Schließvorgang zentriert sich die untere Schulter 36 an der unteren Führung 28, so daß der Zapfen 24 in der Abdichtung 26 genau sitzt. Die untere Führung 28 ist mit enger Passung so gestaltet, daß in der Schließposition ein druckdichter Abschluß gegeben ist. Im Vorraum 30 befindliches Schmelzmaterial steht dann unter hohem Druck, der über die Bohrungen 32, 34 eine Entlastung erfährt. (In diesem Zusammenhang sei erwähnt, daß die Anordnung von Führungsstück 40 und Nadel 20 in Fig. 4 um 90° gegenüber Fig. 3 gedreht dargestellt ist.) Fig. 4 zeigt außerdem schematisch eine Form-Kavität K, die in dem (hier nicht dargestellten) Werkzeug zur Aufnahme der Schmelze vorhanden ist, um den von erstarrtem Kunststoff gebildeten Artikel herzustellen.

Man erkennt, daß die Nadel 20 im Ausführungsbeispiel von Fig. 3 und 4 zur Übertritts-Öffnung 58 im Werkzeug zweistufig so geführt ist, daß ein präzises Einfädeln des unteren Nadelabschnitts 22 zuerst in eine obere Führung 38 und dann in eine untere Führung 28 stattfindet, wobei das Nadel-Ende 22 weitestgehend verschleißfrei in den Dichtungssitz 26 eintaucht, der bedarfsweise zylindrisch oder konisch ausgeführt sein kann. Die Eintauchtiefe t (Fig. 4) beträgt z.B. 0,2 mm bis 0,3 mm.

Die zweistufige Zentrierführung macht es möglich, trotz des hohen Drucks der Schmelze auf in der Düse 10 weiter oben bzw. innen angeordnete zusätzliche Führungen zu verzichten. Die obere Führung 38 stellt eine Vorzentrierung dar, die noch ein gewisses Spiel von z.B. 0,2 mm im Durchmesser zuläßt. Das Führungsstück 40 kann diese obere Führung 38 bereits bei der Fertigung erhalten, ohne daß es einer Nacharbeit bedarf. Die untere Führung 28 wird nach dem Einschrauben des Führungsstücks 40 in das Materialrohr 14 im eingeschraubten Zustand zentrisch zum Materialrohr 14 geschliffen, so daß der Schaftteil 44 samt unterer Verjüngung 36 und Endteil bzw. Zapfen 24 praktisch spielfrei an und in die Übertritts-Öffnung 58 des Werkzeuges gelangt. Das trägt wesentlich zu langer Lebensdauer und zuverlässigem Betrieb bei.

Die Erfindung ist nicht auf die beschriebenen Ausführungsformen beschränkt; vielmehr sind zahlreiche Abwandlungen möglich. Sie ist namentlich auch auf Kaltkanal-Anordnungen anwendbar, bei denen das Materialrohr gekühlt und das Werkzeug beheizt ist. Man erkennt jedoch, daß eine bevorzugte Nadelverschlußdüse 10 für Heißkanalsysteme, durch die eine Kunststoff-Schmelze unter hohem Druck einem trenn- und kühlbaren Werkzeug zuführbar ist, das wenigstens eine Form-Kavität K für Spritzgieß-Artikel hat, erfindungsgemäß wenigstens eine in Gleitführungen abgestützte Verschlußnadel 20 aufweist, die zumindest in einem unteren Bereich von der durch ein Materialrohr 14 zugeführten Schmelze umströmbar ist. In eine Austrittsöffnung 18, die der Form-Kavität K in einem Vorraum 30 vorgeordnet ist, kann ein Nadel-Endstück 24 an einem z.B. zylindrischen oder konischen Dichtungssitz 26 dicht abschließend eingeführt werden.

Darüber bzw. davor befindet sich eine Druckentlastungs-Einrichtung 32, 34, die mit dem Vorraum 30 unmittelbar strömungsverbunden ist und z.B. aus wenigstens einer zur Nadel-Längsrichtung L in einem Winkel W verlaufenden Abzweigbohrung 32 an einem Führungsstück 40 besteht. Wahlweise oder zusätzlich kann in einem unteren Abschnitt des Materialrohrs 14 wenigstens eine zu dem Vorraum 30 führende Abzweigbohrung 34 vorhanden sein, z.B. in Form einer sternförmigen Gruppe von Bohrungen 32, 34 am Umfang des Materialrohrs 14 und/oder Führungsstücks 40. Vorteilhaft hat das Führungsstück 40 zwei in einem Axialabstand - also höhenversetzt - angeordnete Querbohrungen 32, 34, die insbesondere in einem rechten Winkel zueinander stehen. Die obere Bohrung 32 erlaubt einen Druckausgleich zum dickeren Nadelbereich (22) an der oberen Führung 38 hin; die untere Bohrung 34 bewirkt eine Druckentlastung zwischen dem Dichtungssitz 26 am Mundstück 40 und der Nadelschulter 36.

Wichtig ist ferner, daß die Verschlußnadel 20 in ihren Dichtungssitz 26 vorzentriert einführbar ist. Dazu hat der untere Nadel-Abschnitt 22 zweckmäßig wenigstens eine Verjüngung oder Schulter 36, die selbstzentrierend in das gegengleich gestaltete Innenprofil 42 des am Materialrohr 14 vorhandenen Führungsstücks 40 einführbar ist. Der Schaft der Nadel 20 kann in der oberen Führung 38 vorzentriert und ein dünner Schaftteil 44 in der unteren Führung 28 mit enger Passung gleitend umschlossen werden.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- h: Nadelhub
- K: Form-Kavität
- L: Längsrichtung
- t: Eintauchtiefe
- W: Winkel
- 10: [Nadelverschluß-]Düse
- 12: Düsenkörper
- 14: Materialrohr
- 15: Haltering
- 16: Heizwendel
- 18: Austritt(söffnung)
- 20: Nadel
- 22: unterer Abschnitt
- 24: Endteil / Zapfen
- 26: Dichtungssitz
- 28: untere Führung
- 30: Vorraum
- 32: Abzweigbohrung(en)
- 33: Aussparung
- 34: Abzweigbohrung(en)
- 36: untere Verjüngung / Schulter
- 38: obere Führung
- 40: Führungsstück / Mundstück
- 42: Innenprofil
- 44: Schaftteil
- 45: Passung
- 46: obere Verjüngung / Schulter
- 48: Isolierspalt
- 50: Füllkörper
- 51: Freistich
- 52: Titanring / -kappe
- 54: Umfangsnuten
- 56: Werkzeug-Anlagefläche
- 58: Übertritts-Öffnung
- 60: Vorkammerbuchse

## Patentansprüche

1. Nadelverschlußdüse (10) für Heißkanalsysteme, durch die eine Kunststoff-Schmelze unter hohem Druck einem trenn- und kühlbaren Werkzeug zuführbar ist, das wenigstens eine Form-Kavität (K) für Spritzgieß-Artikel hat, mit wenigstens einer innerhalb der beheizbaren Düse (10) in Gleitführungen abgestützten Verschlußnadel (20), die zumindest in einem unteren Bereich von der durch ein Materialrohr (14) zugeführten Schmelze umströmbar ist, und mit wenigstens einer Austrittsöffnung (18), die der Form-kavität (K) in einem Vorraum (30) vorgeordnet und in die ein Nadel-Endstück (24) an einem Dichtungssitz (26) dicht abschließend einführbar ist, dadurch **gekennzeichnet**, daß die Nadel (20) in einem unteren, dem Nadel-Endteil (24) vorgeordneten Abschnitt (22) eine mit dem Vorraum (30) unmittelbar strömungsverbundene Druckentlastungs-Einrichtung (32, 34) aufweist.

2. Düse nach Anspruch 1, dadurch **gekennzeichnet**, daß die Druckentlastungs-Einrichtung aus wenigstens einer zur Nadel-Längsrichtung (L) in einem Winkel (W) verlaufenden Abzweigbohrung (32) an einem Führungsstück (40) besteht.

3. Düse nach Anspruch 2, dadurch **gekennzeichnet**, daß der Winkel (W) kleiner oder gleich 90° ist.

4. Düse nach Anspruch 2 oder 3, dadurch **gekennzeichnet**, daß die bzw. jede Abzweigbohrung (32) das Führungsstück (40) quer oder schräg durchsetzt.

5. Düse nach einem der Ansprüche 1 bis 4, dadurch **gekennzeichnet**, daß wahlweise oder zusätzlich in einem unteren Abschnitt des Materialrohrs (14) wenigstens eine zu dem Vorraum (30) führende Abzweigbohrung (34) vorhanden ist.

6. Düse nach Anspruch 5, dadurch **gekennzeichnet**, daß eine Gruppe von Bohrungen (32, 34) z.B. sternförmig am Umfang des Materialrohrs (14) und/oder Führungsstücks (40) angeordnet ist.

7. Düse insbesondere nach einem der Ansprüche 1 bis 6, dadurch **gekennzeichnet**, daß sie mit einer zweistufigen Zentrierung für die Verschlußnadel(n) (20) versehen ist.

8. Düse nach Anspruch 7, dadurch **gekennzeichnet**, daß die Verschlußnadel (20) in ihren Dichtungssitz (26) vorzentriert einführbar ist.

9. Düse nach Anspruch 7 oder 8, dadurch **gekennzeichnet**, daß der untere Nadel-Abschnitt (22) wenigstens eine Verjüngung oder Schulter (36) aufweist, die selbstzentrierend in das gegengleich gestaltete Innenprofil (42) eines am Materialrohr (14) vorhandenen Führungsstücks (40) einführbar ist.

10. Düse nach einem der Ansprüche 7 bis 9, dadurch **gekennzeichnet**, daß der Schaft der Nadel (20) oberhalb einer oberen Verjüngung oder Schulter (46) in einer oberen Führung (38) gleitend umschließbar ist.

11. Düse nach einem der Ansprüche 7 bis 10, dadurch **gekennzeichnet**, daß ein mit kleinerem Durchmesser abgesetzter Schaftteil (44) der Nadel (20) oberhalb einer unteren Verjüngung (36) in einer unteren Führung (28) mit enger Passung gleitend umschließbar ist.

12. Düse nach einem der Ansprüche 2 bis 11, dadurch **gekennzeichnet**, daß das Führungsstück (40) zwei in einem Axialabstand angeordnete Querbohrungen (32, 34) aufweist.

13. Düse nach Anspruch 12, dadurch **gekennzeichnet**, daß die Querbohrungen (32, 34) in einem Winkel zueinander stehen, insbesondere in einem rechten Winkel und höhenversetzt zueinander.
